# FASCICULE DE BREVET EUROPEEN

(11) **EP 0 807 218 B1**
(45) Date de publication et mention de la délivrance du brevet: **06.03.2002**
(21) Numéro de dépôt: 96942342.5
(22) Date de dépôt: 04.12.1996
(51) Int. Cl.: F16F 15/139, F16F 15/134

(54) **DOUBLE VOLANT AMORTISSEUR A LIMITEUR DE COUPLE ANNULAIRE**
ZWEIMASSENSCHWUNGRAD MIT DREHMOMENTBEGRENZUNG
DOUBLE FLYWHEEL WITH A RING-SHAPED TORQUE LIMITER

(30) Priorité: 04.12.1995 FR 9514302
(43) Date de publication de la demande: 19.11.1997
(73) Titulaire: VALEO, 75017 Paris (FR)
(72) Inventeur: FEIGLER, Jacques, F-95350 Saint-Brice-sous-Forêt (FR)
(74) Mandataire: Gamonal, Didier
(86) Numéro de dépôt international: EP9605412
(87) Numéro de publication internationale: WO9721047

(56) Documents cités:
- WO-A-92/09825
- WO-A-94/27062
- WO-A-95/17618
- DE-C- 3 545 857
- FR-A- 2 617 934
- FR-A- 2 633 682
- GB-A- 2 235 963

## Description

L'invention se rapporte à un double volant amortisseur, pour l'accouplement en rotation d'un moteur à un système de transmission, notamment destiné à un véhicule automobile, comportant deux éléments de volant coaxiaux solidaires respectivement de l'arbre de moteur et d'un organe d'entrée du système de transmission, des moyens d'attelage reliant élastiquement les deux éléments de volant en autorisant un débattement angulaire à l'encontre d'un couple de rappel élastique, avec en parallèle des moyens d'amortissement à friction, et comportant en outre, intercalé entre les moyens d'attelage et un des éléments de volant, dit à décalage, un organe limiteur de couple comprenant au moins une paire de couronnes affrontées, ces couronnes affrontées étant solidaires respectivement des moyens d'attelage et de l'élément de volant à décalage, et sollicitées l'une vers l'autre par des moyens de ressorts pour déterminer un couple au-delà duquel des couronnes se décalent angulairement.

Il est bien connu que les moteurs à pistons, tels qu'ils équipent les véhicules automobiles, engendrent des oscillations et donc des vibrations de rotation avec des fréquences liées à la vitesse de rotation du moteur en fonction du nombre de cylindres et du nombre de temps du cycle moteur, ces vibrations étant génératrices de bruits désagréables et susceptibles de provoquer des usures prématurées d'organes du système de transmission.

Ces vibrations sont d'autant plus marquées qu'elles excitent des résonances dans le système de transmission, ces résonances résultant de la combinaison des inerties des organes tournants, de la raideur de torsion des organes de transmission et, le cas échéant, des amortissements par friction ou viscosité.

Pour combattre ces inconvénients, on a introduit des filtrages des vibrations (des oscillations) de rotation, en dotant de filtres mécaniques la chaîne des organes de transmission du système, ces filtres comprenant, entre un organe menant et un organe mené, des moyens d'attelage agencés circonférentiellement autorisant un débattement angulaire entre ces organes à l'encontre d'un couple de rappel élastique autour d'une position d'équilibre correspondant au couple moyen transmis, ces moyens d'attelage comportant en parallèle des moyens amortisseurs à friction.

Ainsi on peut réduire l'amplitude des oscillations jusqu'à un niveau tel que, dans le cas d'un système de transmission comprenant une boîte de vitesses, l'entrechoquement des pignons de ladite boîte ne puisse plus se produire.

Pendant longtemps, on a logé presque exclusivement les filtres dans le disque de friction de l'embrayage.

Compte tenu de l'évolution technologique des moteurs et des systèmes de transmission, notamment pour réduire toujours plus la consommation, on est arrivé à des limites.

En effet cette réduction de consommation conduit notamment à réduire le régime de ralenti du moteur, à une augmentation du couple moteur à bas régime, à l'allégement des carters, à l'introduction d'un cinquième rapport dans le boîte de vitesses et à l'utilisation d'huiles plus fluides dans le système de transmission.

Tout ceci conduit à amener la fréquence de résonance du système mécanique oscillant allant du moteur au système de transmission en-deça du régime de ralenti du moteur.

Pour ce faire une nouvelle approche a été rendue nécessaire pour modifier le facteur d'inertie. Cette approche consiste à scinder le volant moteur en deux parties et à insérer entre ces deux parties une raideur avec des moyens d'amortissement à friction.

Ainsi on a proposé ce que l'on appelle un double volant amortisseur, où l'on dispose les moyens d'attelage et les moyens amortisseurs à friction entre deux éléments de volant coaxiaux, l'un, primaire, étant solidaire en rotation de l'arbre moteur, et l'autre, secondaire, étant solidaire de l'organe d'entrée du système de transmission, c'est-à-dire, généralement, l'embrayage dont l'élément de volant secondaire constitue un plateau de réaction. Grâce à l'inertie propre de l'élément de volants primaire et secondaire, la fréquence de coupure du filtre peut être inférieure à la fréquence fondamentale (de résonance) de vibration engendrée par le moteur au régime de ralenti et en régime de marche normale.

Par ailleurs, en raison des dimensions nécessaires du double volant on peut loger relativement facilement, dans une cavité ménagée entre les éléments de volant, des moyens d'attelage autorisant des débattements angulaires importants et présentant des raideurs croissant avec le couple transmis dans une large proportion.

Toutefois, la basse fréquence de coupure à faible couple transmis et le fort débattement angulaire autorisé entraînent conjointement que le lancement du moteur risque de détériorer les moyens d'attelage en raison de ce que, lorsque le pignon de démarreur vient en prise avec la couronne de démarrage montée à la périphérie de l'élément de volant primaire, les moyens d'attelage sont amenés au débattement angulaire maximal par le couple créé par le démarreur alors que l'élément secondaire est à l'arrêt, tandis que la croissance de la vitesse de rotation du moteur et de la fréquence fondamentale de vibration font passer cette dernière par la fréquence de coupure ou de résonance du filtre, où la résonance induit des vibrations de forte amplitude.

On a proposé, comme décrit par exemple dans le document US-A-4,274,524, pour surmonter cette difficulté, d'équiper les doubles volants amortisseurs d'un organe limiteur de couple intercalé entre les moyens d'attelage et un des éléments de volant, dit à décalage. Cet organe limiteur de couple peut comprendre au moins une paire de couronnes affrontées, celles-ci solidarisées respectivement aux moyens d'attelage et à l'élément de volant à décalage, et sollicitées l'une vers l'autre par des moyens de ressorts pour déterminer un couple au-delà duquel les couronnes affrontées se décalent angulairement. On évite ainsi de forcer sur les éléments d'attelage qui, de ce fait, ne se détériorent pas prématurément. Usuellement, on utilise une rondelle Belleville comme moyens de ressorts ; des problèmes de maîtrise de la charge exercée par la rondelle Belleville se posent du fait que ladite rondelle Belleville est implantée sur un grand diamètre et a une faible hauteur.

Pour cette raison on a déjà proposé, dans les documents WO-A-92/09825 et GB-A-2 235 963, une disposition dans laquelle un organe limiteur de couple est engagé dans une gorge de l'élément de volant primaire ménagée à la périphérie externe de celui-ci et présentant deux flancs perpendiculaires à l'axe du volant et un fond reliant les deux flancs, un premier flanc et le fond étant ménagés dans la partie transversale de l'élément de volant primaire proprement dit et dans un rebord annulaire d'orientation axiale de celui-ci, tandis que le second flanc est ménagé dans une bride annulaire rapportée sur ledit rebord, les flancs constituant les premières couronnes affrontées de deux paires, tandis que des secondes couronnes affrontées aux premières sont constituées par des patins insérés dans les faces respectives d'une pièce annulaire. Des moyens de ressorts sont disposés pour solliciter les couronnes affrontées suivant des parallèles à l'axe du double volant et répartis sur un cercle sensiblement médian de l'organe limiteur de couple à intervalles angulaires répétitifs.

En pratique les patins sont en nombre réduit et les moyens d'attelage sont des ressorts à action circonférentielle agencés circonférentiellement dans ladite pièce et dans un disque en regard solidaire de l'élément de volant secondaire.

Dans le mode de réalisation des figures 4 et 5 du document GB-A-2 235 963, conforme au préambule de la revendication 1, les patins alternent circonférentiellement avec les ressorts.

Cette disposition donne satisfaction. Néanmoins il est souhaitable, pour mieux contrôler encore le couple à partir duquel se décale (glisse) l'organe limiteur de couple par rapport à l'élément de volant primaire, d'augmenter le nombre de patins.

On se trouve alors dans une impossibilité car l'augmentation du nombre de patins conduit à diminuer la longueur circonférentielle des ressorts et donc à une moins bonne filtration.

La présente invention a pour objet d'augmenter le nombre de patins, tout en ayant une bonne filtration des vibrations.

Suivant l'invention, un double volant amortisseur du type sus-indiqué est caractérisé en ce que l'organe limiteur de couple est en forme d'anneau avec une jante extérieure présentant deux faces planes perpendiculaires à l'axe du volant comportant chacune des empreintes dans lesquelles sont insérés les patins, en ce que les patins portent sur les flancs concernés de la gorge de l'élément de volant à décalage en paires équidistantes et circonférentiellement intercalées entre des pions d'attache disposés en anneau extérieur, correspondant à ladite jante extérieure, concentrique à un anneau intérieur de pions d'attache solidaires de l'élément de volant secondaire, et en ce que les moyens d'attelage agissant en parallèle avec des moyens d'amortissement à friction sont à action radiale et interviennent entre les pions d'attache des deux anneaux.

Grâce à l'invention l'organe limiteur de couple travaille à sec, ce qui permet de mieux contrôler son couple de friction maximal qui est la somme de couples élémentaires, produits de l'élément de surface local par la pression exercée sur cet élément de surface, par le coefficient de frottement entre couronnes affrontées, et par la distance radiale de l'élément de surface à l'axe du volant. Si l'on peut tenir le coefficient de frottement à sec pour une constante en choisissant convenablement l'état de surface des couronnes affrontées, la précision du couple maximal est déterminée par les précisions et régularités de la pression et de la distance radiale. La précision de la distance radiale résulte ce que les couronnes affrontées sont disposées pratiquement sur le plus grand rayon disponible dans le volant, ce qui minimise l'erreur relative, l'erreur absolue étant pratiquement constante. La précision et la régularité de la pression résultent de ce que les points d'application des efforts développés par les moyens de ressorts sont situés radialement sensiblement sur le cercle médian de l'organe limiteur, ce qui équilibre la répartition radiale de la pression, et sont répartis périphériquement en grand nombre angulairement de façon répétitive du fait que les patins alternent circonférentiellement avec des pions d'attache, ce qui permet de les rapprocher et de soumettre des arcs égaux de périphérie à des efforts égaux.

On appréciera que l'organe limiteur de couple avec sa jante a une forme plus simple que celui du document GB-A-2 235 963 en étant robuste du fait de la continuité de la jante.

Grâce aux moyens d'attelage à action radiale, on peut obtenir de grands débattements angulaires entre les éléments de volants primaire et secondaire.

L'élément de volant à décalage est l'élément dit primaire, qui est solidaire en rotation de l'arbre moteur. L'inertie liée à la masse propre de l'organe limiteur de couple se place alors en aval des couronnes affrontées, et développe, au lancement du moteur, un couple d'inertie qui s'ajoute au couple d'inertie de l'élément de volant secondaire et des moyens d'attelage pour solliciter en décalage les couronnes affrontées, et ainsi limiter le couple de rappel des moyens d'attelage provoqué au lancement du moteur.

De préférence également, les moyens de ressorts sont constitués par des empilements de rondelles Belleville à sens de conicité alternés. Cette disposition permet un tarage assez précis de la raideur de l'empilement et une faible sensibilité à la force centrifuge, les rondelles étant pratiquement indéformables latéralement.

Selon une forme de réalisation préférée de l'invention, l'organe limiteur de couple comprend une jante où s'attachent les moyens d'attelage, présentant deux faces planes perpendiculaires à l'axe du volant, et engagée dans une gorge présentant deux flancs plans perpendiculaires à l'axe du volant et un fond reliant les deux flancs, un premier flanc et le fond étant ménagés dans un rebord de l'élément de volant à décalage, tandis que le second flanc est ménagé dans une bride annulaire rapportée sur le rebord, les flancs constituant les premières couronnes affrontées de deux paires, tandis que les secondes couronnes affrontées aux premières sont constituées par des patins insérés dans les faces respectives de la jante, les moyens de ressorts étant logés dans des chambrages pratiqués dans la jante parallèlement à l'axe du volant et débouchant dans une face de cette jante en dessous du patin correspondant.

Les moyens de ressorts s'appuient ainsi sur la jante et sur les ressorts, ce qui réduit les risques de coincement.

Dans une forme particulière de réalisation, les moyens d'attelage comportent des ressorts à spiralage cylindrique et sont montés en traction entre des pions d'attache disposés en deux anneaux concentriques centrés sur l'axe du volant, un anneau extérieur appartenant à la jante du moyen limiteur, et un anneau intérieur appartenant à l'élément de volant autre qu'à décalage, en sorte qu'en l'absence de couple transmis, les axes de ressorts soient en direction radiale.

Cette disposition a pour résultat que la raideur des moyens d'attelage, reportée entre les anneaux, est nulle à couple nul et croît de façon importante avec le couple transmis. On accroît ainsi l'efficacité du filtrage à faible couple transmis, tout en permettant de transmettre des couples élevés.

On appréciera que l'élément de volant primaire et la bride ne délimitent pas une chambre étanche comme dans le document GB-A-2 235 963, en sorte que la disposition est économique. En outre on peut multiplier le nombre de patins pour porter celui-ci par exemple à douze par face.

Des caractéristiques et des avantages de l'invention ressortiront d'ailleurs de la description qui va suivre, en référence aux dessins annexés dans lesquels :
- la figure 1 représente une vue de face partielle d'un double volant amortisseur selon l'invention, l'élément de volant secondaire étant enlevé ;
- la figure 2 représente une coupe transversale du double volant de la figure 1, passant par l'axe du volant ;
- la figure 3 est un détail de montage de l'organe limiteur de couple dans l'élément de volant primaire ;
- la figure 4 représente une variante de réalisation des moyens d'attelage.

Dans ces figures est représenté un double volant amortisseur pour véhicule automobile comportant, pour sa solidarisation à l'arbre moteur du véhicule, un élément de volant primaire 1 et, pour sa solidarisation à un organe d'entrée du système de transmission du véhicule, un élément de volant secondaire 2, montés de manière coaxiale en étant reliés élastiquement par des moyens d'attelage 3 à action radiale, avec en parallèle des moyens d'amortissement à friction 4 à action axiale.

En outre il est prévu un organe limiteur de couple 5 intercalé entre les moyens d'attelage 3 et l'un des éléments de volant, ici l'élément de volant secondaire 2.

Par la suite les éléments de volants primaire 1 et secondaire 2 seront dénommés respectivement volant primaire 1 et volant secondaire 2, tandis que l'organe limiteur de couple 5 sera dénommé limiteur de couple 5.

Ici le volant secondaire 2 est monté de manière coaxiale et rotative sur le volant primaire 1 par l'intermédiaire de moyens de palier 21, ici un roulement à billes, interposés entre la périphérie interne du volant secondaire 2 et la périphérie externe d'un moyeu 10 que présente centralement le volant primaire 1.

Les moyens d'amortissement 4 sont constitués d'une cassette portée par le volant secondaire 2 et d'une rondelle d'entraînement portée par le moyeu 10 du volant primaire 1 comme décrit dans le document FR-A-2 733 810 auquel on pourra se reporter pour plus de précisions.

Ces moyens 4 travaillent à sec et comportent donc une cassette avec deux étriers solidarisés entre eux et, entre ces étriers, un empilement de disques de friction solidaires en rotation alternativement de la cassette (des pattes axiales de l'un des étriers de celle-ci) et de la rondelle d'entraînement, l'empilement étant mis en pression par une rondelle Belleville prenant appui sur la cassette (sur l'étrier le plus externe de celle-ci).

Les moyens de frottement 4 sont donc disposés à l'extérieur d'une cavité du volant primaire 1 par rapport aux moyens de palier 21.

Plus précisément le volant primaire 1, globalement d'orientation transversale, comporte à sa périphérie extrême externe un rebord annulaire d'orientation axiale 12, qui délimite, conjointement avec le moyeu central 10 d'orientation axiale, ladite cavité où se logeront les moyens d'attelage 3.

Le moyeu 10 est prévu pour être monté sur une bride de sortie du vilebrequin du moteur du véhicule à l'aide de vis 10b traversant ledit moyeu 10 dont l'alésage interne 10a est centré par ledit vilebrequin. Une couronne de démarrage 11, propre à être entraînée par le démarreur du véhicule, est fixée à la périphérie externe du volant primaire 1 à la hauteur du rebord 12, à côté de celui-ci.

Le volant secondaire 2 est globalement d'orientation transversale et forme, de manière connue, le plateau de réaction d'un embrayage à disque de friction, non représenté ici, qui est l'organe d'entrée de la transmission du véhicule, comprenant en aval la boîte de vitesses et le différentiel qui attaque l'essieu moteur. Pour ce faire le disque de friction comporte, de manière connue, un moyeu cannelé intérieurement par sa liaison en rotation, ici à l'arbre d'entrée de la boîte de vitesses, en sorte que le volant secondaire 2 est solidaire en rotation dudit organe d'entrée de manière débrayable.

A cet effet le volant secondaire 2 comporte, du côté opposé au volant primaire 1, une face plane 20 perpendiculaire à l'axe commun de symétrie axiale, dit ci-après axe de volant, des volants primaire 1 et secondaire 2. Cette face 20 constitue une face de friction pour le disque de friction adapté à être serré de manière débrayable entre les plateaux de réaction et de pression de l'embrayage doté usuellement d'un diaphragme à cet effet.

Les moyens d'attelage 3 dans leur ensemble (au nombre de douze dans l'exemple choisi) sont destinés à créer un couple de rappel élastique égal en moyenne au couple transmis par le moteur à l'entrée du système de transmission. Ces moyens d'attelage 3 travaillent en traction et comportent, dans un boîtier 33 cylindrique avec un premier fond 31 et un second fond 32, des ressorts à spiralage cylindrique 34 montés dans le boîtier 33 et pris en compression entre le premier fond 31 et un piston 30a fixé à une tige axiale 30 qui traverse le premier fond 31. Les tiges 30 s'articulent en extrémité à autant de pions d'attache 22 disposés en anneau intérieur solidaire du volant secondaire 2, au plus près du moyeu central 10. Les seconds fonds 32 comportent des chapes articulées sur des pions d'attache 15, disposés en anneau extérieur concentrique de l'anneau des pions 22, au voisinage de la périphérie externe du volant primaire 1. Cet anneau de pions 15 est normalement entraîné par le volant primaire 1, par l'intermédiaire du limiteur de couple 5. Ici, les pions 15,22 sont entourés par des douilles d'articulation épaulées intérieurement ; ces pions 15,22 consistent en des rivets fixant lesdites douilles respectivement au volant 2 et au limiteur 5 ; les chapes et les tiges sont articulées sur les douilles.

Le limiteur de couple 5 dans son ensemble est en forme d'anneau avec une jante 50 continue présentant deux faces planes 51 et 52, perpendiculaires à l'axe du volant. Cette jante 50 est engagée dans une gorge, à section en forme de U, formée dans le volant primaire 1 à la périphérie externe de celui-ci, et comportant deux flancs 12a et 13a réunis par un fond 12b. Un premier flanc 12a et le fond 12b sont ménagés dans le rebord 12 constituant la périphérie extrême externe du volant primaire 1.

Le second flanc 13a est ménagé dans une bride annulaire 13, rapportée sur l'extrémité libre du rebord 12.

Le flanc 12a et la face 51 forment une première paire de couronnes affrontées. C'est entre ces couronnes que se produira un glissement lorsque le couple transmis atteindra une valeur maximale. Ce glissement entraînera un décalage angulaire entre la jante 50 du limiteur de couple 5 et le volant primaire 1, ce volant étant désigné, de ce point de vue, par l'expression "élément de volant à décalage" ; bien entendu, le flanc 13a et la face 52 forment une seconde paire de couronnes affrontées.

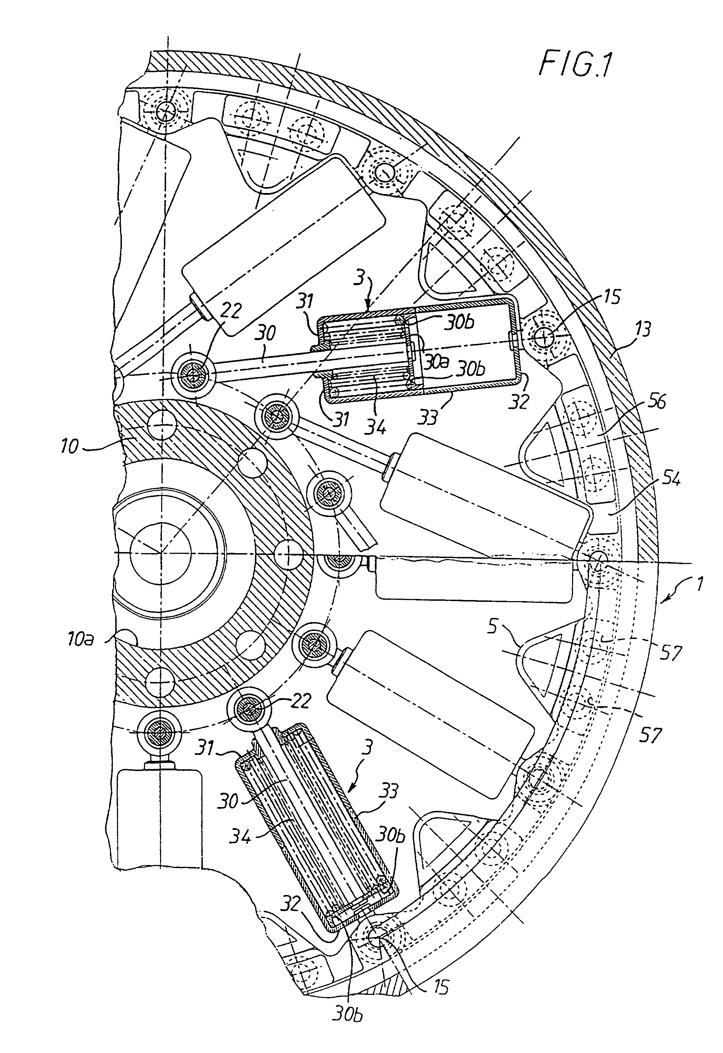

Les flancs 12a et 13a sont usinés dans le métal du rebord 12 et de la bride 13. Les faces 51 et 52 comportent chacune douze patins, respectivement 53 et 54, insérés dans des empreintes ménagées dans les faces de la jante 50 ; ce sont les patins 53,54 qui coopèrent avec les flancs 12a, 13a. Des chambrages cylindriques 57, à axes parallèles à l'axe du volant, sont ménagés à intervalles répétitifs (figure 1) dans la jante 50, et débouchent dans la face 52 sous les patins 54. Ils contiennent des empilements 57a de rondelles Belleville à sens de conicité alternés, en sorte que les rondelles successives s'appliquent l'une sur l'autre par leurs grande ou petite bases, pour constituer des ressorts de grande raideur à possibilité de grands déplacements. Ces empilements 57a formant ressorts sollicitent en écartement les patins 54 et la jante 50, de sorte que les patins 53 et 54 sont appliqués sur les flancs 12a et 13a de la gorge respectivement par des forces pratiquement égales et bien contrôlées, sans risque de coincement.

Pour obtenir un coefficient de frottement déterminé entre couronnes affrontées, des feuilles de garniture de friction 55 et 56 sont collées sur les surfaces externes des patins 53 et 54 pour coopération avec les flancs 12a, 13a. Les garnitures 55,56 ont une surface inférieure à celle des patins 53,54.

On observera (figure 1) que les emplacements des chambrages 57 sont disposés radialement sur un cercle pratiquement médian des patins 54, de sorte que ceux-ci portent sur le flanc 13a de façon équilibrée, et circonférentiellement en paires équidistantes intercalées, suivant une caractéristique, entre les pions d'attache 15 appartenant au limiteur de couple 5.

Il en résulte que les patins 54, et les patins 53 par réaction, sont sollicités en appui sur les flancs de gorge 13a et 12a. avec une pression constante et régulière sur toute la périphérie, malgré le développement de cette périphérie. C'est cette répartition circonférentielle équilibrée qui est évoquée par l'expression "à intervalles angulaires répétitifs". On a discuté plus haut l'intérêt, pour le réglage précis du couple de friction au-delà duquel l'organe limiteur se décale (glisse) par rapport à l'élément de volant à décalage (ici le volant primaire 1), de disposer le limiteur de couple 5 sur le plus grand diamètre disponible, et de distribuer bien régulièrement la pression entre couronnes affrontées. Les patins 54,53 présentent dorsalement des rondelles engagées respectivement dans le chambrage cylindrique 57 et dans un autre chambrage cylindrique 157 pour liaison en rotation des patins avec la jante 50 ; deux chambrages sont prévus ici par patin 53,54.

On comprendra que, en fonctionnement normal, moteur déjà lancé, le couple transmis ne dépasse pas le couple maximal que peut fournir le moteur, et donc que le limiteur de couple 5 ne peut se décaler par rapport à l'élément de volant à décalage 1. Par ailleurs, au lancement du moteur par le démarreur, si le couple transmis atteint le couple limite au-delà duquel la jante 50 de l'organe limiteur 5 se décale par rapport à l'élément de volant à décalage 1, l'excès de couple appliqué au double volant est absorbé par la friction du limiteur de couple 5 lors du décalage angulaire de la jante 50 par rapport au volant primaire 1. Ce couple limite peut être atteint, soit sous l'effort du démarreur, soit en raison d'une résonance induite au voisinage de la fréquence de coupure du filtre constitué par le double volant amortisseur et les organes de transmission en aval.

Pour en revenir aux moyens d'attelage 3, ici à action radiale pour une très bonne filtration des vibrations de manière décrite ci-après, les efforts développés par les ressorts 34 entre le piston 30a et le premier fond 31 se traduisent par une force de traction sur la tige 30. Lorsqu'aucun couple n'est transmis, les sollicitations sur les pions d'attache 15 et 22 tendent à mettre ces pions en alignement radial, la direction de la force de traction passant par l'axe du volant, ce qui annule le bras de couple. On comprend qu'un décalage angulaire infiniment petit entre les volants primaire et secondaire n'induit que des variations infiniment petites du bras de couple et de la longueur des moyens d'attelage 3 ; la variation de couple transmis est alors un infiniment petit du second ordre, ce qui détermine une raideur nulle.

A des décalages angulaires entre les volants 1,2 plus importants, des variations infinitésimales de décalage se traduisent par des accroissements infinitésimaux simultanés du couple et de la longueur des moyens d'attelage 3, ce qui détermine une raideur croissante du couple de rappel. Ainsi, à faible couple transmis, la raideur du couple de rappel est faible et détermine une fréquence de coupure du filtre de vibrations basse, malgré une inertie de rotation en aval faible à fort couple transmis, la raideur du couple de rappel est grande, mais l'inertie en aval est elle aussi élevée, de sorte que la fréquence de coupure du filtre n'est pas sensiblement accrue, et en outre un fort couple transmis correspond à un régime relativement élevé du moteur où la fréquence fondamentale des vibrations est élevée tandis que leur amplitude est modérée, de sorte que le filtrage ne pose pas question.

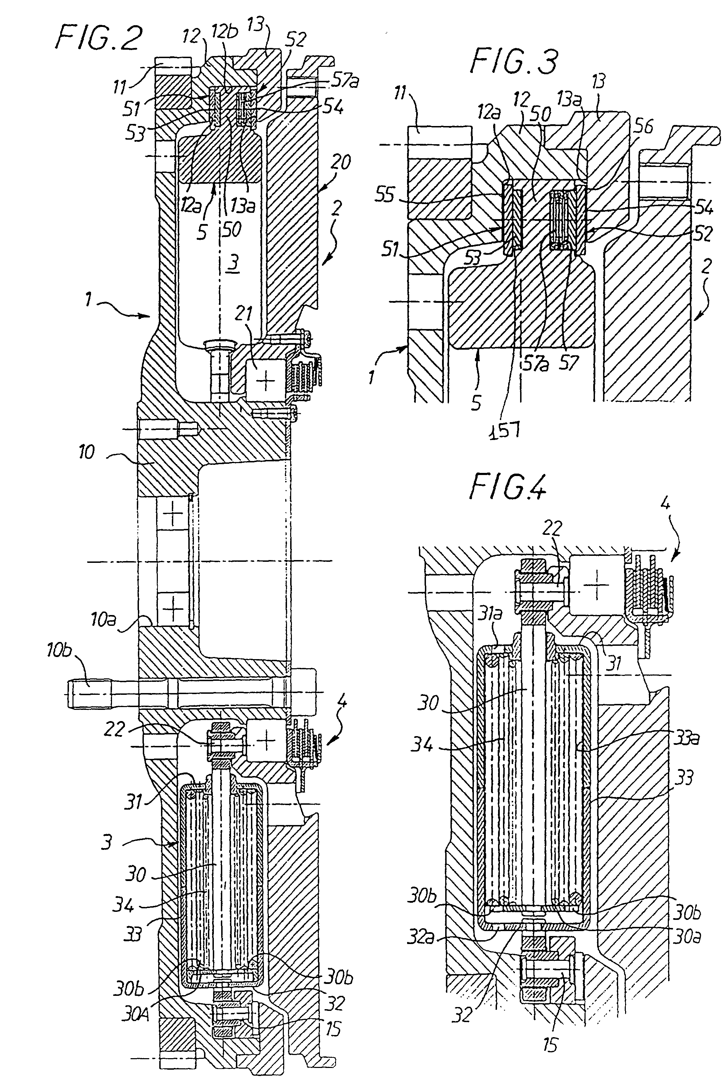

Les moyens d'attelage 3 des figures 1 et 2 sont prévus pour contenir un lubrifiant pour les ressorts 34 ; le piston 30a comporte des passages tels que des évents 30b pour que le lubrifiant n'entrave pas les déplacements de ce piston 30a dans le boîtier 33.

Les moyens d'attelage 3 de la figure 4 sont prévus pour fonctionner à sec. Aussi le boîtier 33 est muni d'une garniture intérieure 33a, en polymère à faible coefficient de frottement ; en outre le piston 30a et les fonds de boîtier 31 et 32 présentent des évents, respectivement 30b, 31a et 32a. Ici, ainsi qu'il ressort de la description, chaque boîtier 33 est en deux parties ; plus précisément, les extrémités libres des fonds 31,32 sont affrontées et soudées.

En pratique, une chemise métallique est interposée, selon les figures 1 à 3, entre la périphérie interne de chaque boîtier 33 et le ressort interne 34. Ainsi, le boîtier 33 peut être métallique en permettant des opérations de soudure, tandis que la chemise guide les ressorts 34 et est résistante à l'usure. Elle évite une incrustation des ressorts 34 dans le boîtier. Bien entendu, on peut prévoir de telles chemises à la figure 4. Le fond 31 est troué centralement pour montage d'une douille de guidage (non référencée) pour la tige 30.

On appréciera qu'avec les boîtiers 33 on occupe au mieux l'espace disponible entre les volants 1,2 et qu'ils ont la longueur maximale compte tenu de l'implantation des pions 15,22, les pions 22 étant fixés sur la paroi transversale interne du volant secondaire 2 servant de butée axiale au roulement 21.

En outre, compte tenu de l'implantation radiale du boîtier 33, on peut rajouter de la masse à la périphérie externe du volant primaire 1. C'est pour cette raison que le limiteur 5 (la jante 50) présente des saillies, en forme de pointes, dirigées radialement vers l'intérieur, entre deux boîtiers consécutifs, comme mieux visible à la figure 1.

Le volant primaire 1 équipé du limiteur 5 a ainsi une grande inertie. Bien entendu, on peut inverser les structures, les tiges 30 étant alors articulées au niveau du limiteur de couple 5. Néanmoins, la solution des figures 1 à 4 est plus avantageuse car elle permet de disposer la plus grande masse des boîtiers 33 à la périphérie externe du volant amortisseur, ce qui permet d'augmenter l'inertie du volant amortisseur. Une filtration optimale des vibrations est ainsi obtenue.

On appréciera l'alternance circonférentielle d'un grand nombre de pions 15 et de patins 53,54 due au fait que les moyens d'attelage 3 sont à action radiale.

Ce nombre élevé de pions 15 - donc de boîtier 33 - et de patins 53,54 permet de bien filtrer les vibrations et d'avoir une bonne répartition des pressions et donc une bonne précision en ce qui concerne le couple à partir duquel le limiteur de couple 5 entre en action.

Bien entendu, l'invention n'est pas limitée aux exemples décrits, mais en embrasse toutes les variantes de réalisation, dans le cadre des revendications, en particulier les vis 10b peuvent être implantées au-dessus du roulement 21, le volant secondaire étant alors doté de trous pour accès aux têtes des vis. Ceci permet d'allonger encore les boîtiers et de réduire la taille du roulement 21 et est rendu possible par la présence des boîtiers, les vis étant alors implantées circonférentiellement entre les pions 22. Les moyens d'amortissement de friction 4 peuvent être implantés entre les deux volants 1,2 et comporter une rondelle de frottement entraînée par les pions 22 alors prolongés et frottant contre le volant primaire 1.

Les boîtiers 33 peuvent être transformés en amortisseurs. Dans ce cas les évents 30b sont remplacés par des passages calibrés et les boîtiers 33 sont remplis partiellement d'huile.

## Revendications

1. Double volant amortisseur, pour l'accouplement en rotation d'un moteur à un système de transmission, notamment destiné à un véhicule automobile, comportant deux éléments de volant coaxiaux (1,2) solidaires respectivement de l'arbre de moteur et d'un organe d'entrée du système de transmission, des moyens d'attelage (3) reliant élastiquement les deux éléments de volant (1,2) en autorisant un débattement angulaire à l'encontre d'un couple de rappel élastique et comportant en outre, intercalé entre les moyens d'attelage (3) et l'élément de volant primaire (1), dit élément de volant à décalage, un organe limiteur de couple (5), d'une part, engagé dans une gorge (12,12b,13a) de l'élément de volant à décalage (1) présentant deux flancs plans (12a, 13a) perpendiculaires à l'axe du volant et un fond (12b) reliant les deux flancs, un premier flanc (12a) et le fond (12b) étant ménagés dans l'élément de volant à décalage (1) présentant à cet effet un rebord (12) d'orientation axiale à sa périphérie extrême externe, tandis que le second flanc est ménagé dans une bride annulaire (13) rapportée sur ledit rebord et, d'autre part, comprenant deux paires de couronnes affrontées (12a, 51 ; 13a, 52) sollicitées l'une vers l'autre par des moyens de ressort (57a) pour déterminer un couple au-delà duquel ces couronnes (12a, 51 ; 13a, 52) se décalent angulairement, les flancs (12a,13a) constituant les premières couronnes affrontées de deux paires, tandis que les secondes couronnes affrontées aux premières sont constituées par des patins (53,54) portés par l'organe limiteur de couple (5), dans lequel l'organe limiteur (5) est disposé à proximité de la périphérie externe extrême de l'élément de volant à décalage (1), tandis que les moyens de ressorts (57a) sont disposés pour solliciter les couronnes affrontées (12a, 51 ; 13a, 52) suivant des parallèles à l'axe du volant, et répartis sur un cercle sensiblement médian de l'organe limiteur (5) à intervalles angulaires répétitifs, **caractérisé en ce que** l'organe limiteur (5) est en forme d'anneau avec une jante (50) extérieure présentant deux faces planes (51,52) perpendiculaires à l'axe du volant comportant chacune des empreintes dans lesquelles sont insérés les patins (53,54), **en ce que** les patins (53,54) portent sur les flancs concernés (12a,13a) de la gorge de l'élément de volant à décalage (1) en paires équidistantes et circonférentiellement intercalées entre des pions d'attache (15) disposés en anneau extérieur, correspondant à ladite jante extérieure, concentrique à un anneau intérieur de pions d'attache (22) solidaires de l'élément de volant secondaire (2), et **en ce que** les moyens d'attelage (3) agissant en parallèle avec des moyens d'amortissement à friction (4) sont à action radiale et interviennent entre les pions d'attache (15,22) des deux anneaux.

2. Volant selon la revendication 1, **caractérisé en ce que** les moyens de ressorts sont constitués par des empilements axiaux de rondelles Belleville à sens de conicité alternés (57a).

3. Volant selon la revendication 1, **caractérisé en ce que** le premier flanc (12a) et le fond (12b) de la gorge (12a,12b,13a) sont ménagés dans le rebord (12) de l'élément de volant à décalage (1), et **en ce que** les moyens de ressorts (57a) sont logés dans des chambrages (57) pratiqués dans la jante (50) parallèlement à l'axe du volant et débouchant dans une face (52) de cette jante (50) en dessous du patin (54) correspondant.

4. Volant selon la revendication 3, **caractérisé en ce que** les patins (53,54) présentent dorsalement des rondelles engagées respectivement dans les chambrages (57) des logements des moyens de ressorts (57a) et dans des autres chambrages cylindriques (157) pour liaison en rotation des patins (53,54) avec la jante (50).

5. Volant selon la revendication 3, **caractérisé en ce que** des garnitures de friction (55,56) sont collées à la surface des patins (53,54).

6. Volant selon la revendication 1, **caractérisé en ce que** les moyens d'attelage (3) comportent des ressorts à spiralage cylindrique (34) et sont montés en traction entre des pions d'attache (15,22) disposés en deux anneaux concentriques centrés sur l'axe du volant, l'anneau extérieur (15) appartenant à la jante (50) du moyen limiteur (5), et l'anneau intérieur (22) appartenant à l'élément de volant secondaire (2), en sorte qu'en l'absence de couple transmis, les axes de ressorts (34) soient en direction radiale.

7. Volant selon la revendication 6, **caractérisé en ce que** les moyens d'attelage (3) comportent chacun un boîtier cylindrique (33) où les ressorts à spiralage cylindrique (34) sont disposés en compression entre un premier fond (31) de boîtier et un piston (30a) solidaire d'une tige (30) traversant le premier fond (31) pour s'atteler à un pion d'attache (22) d'un premier anneau tandis qu'un second fond (32) de boîtier s'attelle à un pion d'attache (15) de l'autre anneau.

8. Volant selon la revendication 7, **caractérisé en ce que** le second fond (32) de boîtier s'attelle à un pion d'attache (15) de l'anneau extérieur, tandis que la tige (30) s'attelle à un pion d'attache (22) de l'anneau extérieur.

9. Volant selon l'une des revendications 7 et 8, **caractérisé en ce que** le boîtier (31,32,33) est adapté à contenir un lubrifiant.

10. Volant selon l'une des revendications 7 et 8, **caractérisé en ce que** le boîtier (31,32,33) et le piston (30a) comportent des évents (30b, 31a, 32a).

## Patentansprüche

1. Zweimassen-Dämpfungsschwungrad für die rotatorische Verbindung eines Motors mit einem Kraftübertragungssystem, insbesondere für ein Kraftfahrzeug, umfassend zwei koaxiale Schwungradelemente (1, 2), die fest mit der Antriebswelle bzw. mit einem Eingangsorgan des Kraftübertragungssystems verbunden sind, Verbindungsmittel (3), welche die beiden Schwungradelemente (1, 2) elastisch verbinden, wobei sie eine Winkelauslenkung entgegen einem elastischen Rückstellmoment ermöglichen, wobei es außerdem, zwischen den Verbindungsmitteln (3) und dem als versetzt bezeichneten Primärschwungradelement (1) eingefügt, ein Drehmomentbegrenzerorgan (5) umfaßt, das einerseits in eine Auskehlung (12, 12b, 13a) des versetzten Schwungradelements (1) eingesetzt ist, die zwei zur Achse des Schwungrads senkrechte ebene Flanken (12a, 13a) und einen die beiden Flanken verbindenden Boden (12b) aufweist, wobei eine erste Flanke (12a) und der Boden (12b) in das versetzte Schwungradelement (1) eingearbeitet sind, das dazu eine axial ausgerichtete Randleiste (12) an seinem äußersten Umfang aufweist, während die zweite Flanke in einen an die besagte Randleiste angefügten ringförmigen Flansch (13) eingearbeitet ist, und das andererseits zwei Paare gegenüberliegender Kränze (12a, 51; 13a, 52) umfaßt, die durch Federmittel (57a) zueinander hin beaufschlagt werden, um ein Drehmoment zu bestimmen, bei dessen Überschreitung sich diese Kränze (12a, 51; 13a, 52) winklig versetzen, wobei die Flanken (12a, 13a) die ersten gegenüberliegenden Kränze von zwei Paaren bilden, während die den ersten gegenüberliegenden zweiten Kränze aus Gleitstücken (53, 54) bestehen, die am Drehmomentbegrenzerorgan (5) angebracht sind, wobei das Begrenzerorgan (5) in der Nähe des äußersten Umfangs des versetzten Schwungradelements (1) angeordnet ist, während die Federmittel (57a) angeordnet sind, um die gegenüberliegenden Kränze (12a, 51; 13a, 52) entlang Parallelen zur Achse des Schwungrads zu beaufschlagen und auf einem in etwa mittleren Kreis des Begrenzerorgans (5) in sich wiederholenden Winkelabständen verteilt sind, **dadurch gekennzeichnet, daß** das Begrenzerorgan (5) in Form eines Rings mit einer äußeren Felge (50) ausgeführt ist, die zwei zur Achse des Schwungrads senkrechte ebene Flächen (51, 52) aufweist, die jeweils Eintiefungen enthalten, in die die Gleitstücke (53, 54) eingesetzt sind, und daß die Gleitstücke (53, 54) auf den betreffenden Flanken (12a, 13a) der Auskehlung des versetzten Schwungradelements (1) in Paaren aufliegen, die abstandsgleich und umfangsmäßig zwischen Befestigungsstiften (15) eingefügt sind, die in Form eines der besagten äußeren Felge entsprechenden Außenrings angeordnet sind, der konzentrisch zu einem Innenring aus fest mit dem Sekundärschwungradelement (22) verbundenen Befestigungsstiften (22) angeordnet ist, und daß die Verbindungsmittel (3), die parallel mit Reibungsdämpfungsmitteln (4) wirken, radial wirksam sind und zwischen den Befestigungsstiften (15, 22) der zwei Ringe zum Einsatz kommen.

2. Schwungrad nach Anspruch 1, **dadurch gekennzeichnet, daß** die Federmittel aus axialen Federpaketen von Tellerfedern mit abwechselnden Konizitätsrichtungen (57a) bestehen.

3. Schwungrad nach Anspruch 1, **dadurch gekennzeichnet, daß** die erste Flanke (12a) und der Boden (12b) der Auskehlung (12a, 12b, 13a) in der Randleiste (12) des versetzten Schwungradelements (1) angeordnet sind und daß die Federmittel (57a) in Kammern (57) aufgenommen sind, die in die Felge (50) parallel zur Achse des Schwungrads eingearbeitet sind und in einer Fläche (52) dieser Felge (50) unterhalb des entsprechenden Gleitstücks (54) münden.

4. Schwungrad nach Anspruch 3, **dadurch gekennzeichnet, da**ß die Gleitstücke (53, 54) rückseitig Scheiben aufweisen, die in die Kammern (57) der Aufnahmen der Federmittel (57a) bzw. in andere zylindrische Kammern (157) für die drehfeste Verbindung der Gleitstücke (53, 54) mit der Felge (50) eingesetzt sind.

5. Schwungrad nach Anspruch 3, **dadurch gekennzeichnet**, **da**ß die Reibbeläge (55, 56) auf der Oberfläche der Gleitstücke (53, 54) verklebt sind.

6. Schwungrad nach Anspruch 1, **dadurch gekennzeichnet, da**ß die Verbindungsmittel (3) zylindrisch gewickelte Schraubenfedern (34) umfassen und unter Zug zwischen Befestigungsstiften (15, 22) eingesetzt sind, die in zwei auf die Achse des Schwungrads zentrierten konzentrischen Ringen angeordnet sind, wobei der Außenring (15) zur Felge (50) des Begrenzermittels (5) gehört und der Innenring (22) zum Sekundärschwungradelement (2) gehört, so daß bei Nichtvorliegen eines übertragenen Drehmoments die Achsen der Federn (34) in radialer Richtung verlaufen.

7. Schwungrad nach Anspruch 6, **dadurch gekennzeichnet**, **da**ß die Verbindungsmittel (3) jeweils ein zylindrisches Gehäuse (33) umfassen, in dem die zylindrisch gewickelten Schraubenfedern (34) unter Druck zwischen einem ersten Gehäuseboden (31) und einem Kolben (30a) angeordnet sind, der fest mit einer Stange (30) verbunden ist, die durch den ersten Boden (31) hindurchgeht, um sich an einen Befestigungsstift (22) des ersten Rings anzufügen, während sich ein zweiter Gehäuseboden (32) an einen Befestigungsstift (15) des anderen Rings anfügt.

8. Schwungrad nach Anspruch 7, **dadurch gekennzeichnet, da**ß sich der zweite Gehäuseboden (32) an einen Befestigungsstift (15) des Außenrings anfügt, während sich die Stange (30) an einen Befestigungsstift (22) des Außenrings (22) anfügt.

9. Schwungrad nach einem der Ansprüche 7 oder 8, **dadurch gekennzeichnet, daß** das Gehäuse (31, 32, 33) angepaßt ist um ein Schmiermittel zu enthalten.

10. Schwungrad nach einem der Ansprüche 7 oder 8, **dadurch gekennzeichnet, da**ß das Gehäuse (31, 32, 33) und der Kolben (30a) Auslässe (30b, 31a, 32a) umfassen.

## Claims

1. A damping double flywheel, for coupling an engine in rotation to a transmission system, especially for a motor vehicle, and comprising two coaxial flywheel elements (1, 2) which are secured respectively to the engine shaft and to an input member of the transmission system, coupling means (3) elastically coupling the two flywheel elements (1, 2) together while permitting angular displacement against an elastic reaction torque, and further including, interposed between the coupling means (3) and the primary flywheel element (1), referred to as an offset flywheel element, a torque limiter member (5) which is engaged in a groove (12, 12b, 13a) of the offset flywheel element (1), having two flat flanks (12a, 13a) at right angles to the axis of the flywheel together with a base portion (12b) joining the two flanks together, a first flank (12a) and the base portion (12b) being formed in the offset flywheel element (1), which for this purpose has an axially oriented flange (12) at its extreme outer periphery, while the second flank is formed in an annular flange (13) engaged on the said flange, the torque limiter member including two pairs of crown elements (12a, 51; 13a, 52) in face-to-face relationship, which are urged towards each other by spring means (57a) so as to determine a torque above which the said crown elements (12a, 51; 13a, 52) become offset angularly, the flanks (12a, 13a) constituting the first face-to-face crown elements of two pairs, while the second crown elements, in face-to-face relationship with the first crown elements, are defined by pads (53, 54) which are carried by the torque limiter member (5), which is disposed close to the extreme outer periphery of the offset flywheel element (1), while the spring means (57a) are so disposed as to urge the face-to-face crown elements (12a, 51; 13a, 52) in directions parallel to the axis of the flywheel, and are spaced apart on a substantially median circle of the torque limiter member (5) at repeated angular intervals, **characterised in that** the torque limiter member (5) is in the form of an annular ring, with an external rim portion (50) having two flat faces (51, 52) at right angles to the axis of the flywheel, with each said ring including recesses into which the pads (53, 54) are inserted, **in that** the pads (53, 54) bear on the appropriate flanks (12a, 13a) of the groove in the offset flywheel element (1) in equidistant pairs, and are interposed circumferentially between attachment pins (15) which are disposed in an outer ring which corresponds to the said external rim portion and is concentric with an inner ring of attachment pins (22) fixed to the secondary flywheel element (2), and **in that** the coupling means (3), working in parallel with the friction damping means (4), are radially acting and are interposed operatively between the attachment pins (15, 22) of the two rings.

2. A flywheel according to Claim 1, **characterised in that** the spring means consist of axial stacks of Belleville rings (57a) arranged in alternate directions of conicity.

3. A flywheel according to Claim 1, **characterised in that** the first flank (12a) and the base portion (12b) of the groove (12a, 12b, 13a) are formed in the flange (12) of the offset flywheel element (1), and **in that** the spring means (57a) are lodged in housings (57), which are formed in the rim portion (50) parallel to the axis of the flywheel, and which are open in a face (52) of the said rim portion (50) radially inwardly of the corresponding pad (54).

4. A flywheel according to Claim 3, **characterised in that** the pads (53, 54) have dorsal rings which are engaged, respectively, in the housings (57) containing the spring means (57a) and in further cylindrical housings (157), so as to couple the pads (53, 54) in rotation with the rim portion (50).

5. A flywheel according to Claim 3, **characterised in that** friction liners (55, 56) are adhesively attached to the surface of the pads (53, 54).

6. A flywheel according to Claim 1, **characterised in that** the coupling means (3) include cylindrical helical springs (34) and are mounted in traction between attachment pins (15, 22) disposed in two concentric annular rings centred on the axis of the flywheel, the outer annular ring (15) being carried by the rim portion (50) of the torque limiter means (5), and the inner annular ring (22) being part of the secondary flywheel element (2), so that in the absence of a transmitted torque, the axes of the springs (34) extend radially.

7. A flywheel according to Claim 6, **characterised in that** each of the coupling means (3) includes a cylindrical housing (33) in which the cylindrical helical springs (34) are disposed in compression between a first base portion (31) of the housing and a piston (30a) which is fixed to a piston rod (30) extending through the first base portion (31) for attachment to an attachment pin (22) of a first annular ring, while a second base portion (32) of the housing is attached to an attachment pin (15) of the other annular ring.

8. A flywheel according to Claim 7, **characterised in that** the second base portion (32) of the housing is attached to an attachment pin (15) of the outer annular ring, while the piston rod (30) is attached to an attachment pin (22) of the inner annular ring.

9. A flywheel according to Claim 7 or Claim 8, **characterised in that** the housing (31, 32, 33) is adapted to contain a lubricant.

10. A flywheel according to Claim 7 or Claim 8, **characterised in that** the housing (31, 32, 33) and the piston (30a) include relief ports (30b, 31a, 32a).
